# EUROPEAN PATENT APPLICATION

(11) **EP 3 269 474 A1**
(43) Date of publication of application: **17.01.2018**
(21) Application number: 17180906.4
(22) Date of filing: 12.07.2017
(51) Int. Cl.: B22F 3/105

(54) **ADDITIVE MANUFACTURING METHOD**

(30) Priority: 12.07.2016 US 201615208291
(71) Applicant: Hamilton Sundstrand Corporation, Charlotte, NC 28217-4578 (US)
(72) Inventor: VERSLUYS, Kiley James, Hartford, CT Connecticut 06103 (US); MIRONETS, Sergey, Charlotte, NC North Carolina 28202 (US)
(74) Representative: Gittins, Alex Michael

(57) **Abstract**

A method for making an article (100) is described that includes generating a digital model of the article (100) that comprises an internal cavity (110,112). The digital model is inputted into an additive manufacturing apparatus or system (10) comprising an energy source (12). The additive manufacturing apparatus (10) applies energy from the energy source (12) to successively applied incremental quantities of a metal powder (22), which fuses the powder (22) to form incremental portions of the metal powder (22) according to the digital model to form the article (100) with the internal cavity (110,112). Abrasive magnetic particles (206) are disposed in the internal cavity (110,112), and a magnetic field (207) is applied to the magnetic particles (206) in the internal cavity (110,112). Repeated relative movement is imparted between the magnetic field (207) and the article (100) to hone a fused metal powder surface of the internal cavity (110,112).

## Description

### BACKGROUND

The described subject matter relates generally to the field of additive manufacturing. In particular, the subject matter relates to operating an energy beam to facilitate additive manufacturing.

Additive manufacturing refers to a category of manufacturing methods characterized by the fact that the finished part is created by layer-wise construction of a plurality of thin sheets of material. Additive manufacturing may involve applying liquid or powder material to a workstage, then doing some combination of sintering, curing, melting, and/or cutting to create a layer. The process is repeated up to several thousand times to construct the desired finished component or article.

Various types of additive manufacturing are known. Examples include stereo lithography (additively manufacturing objects from layers of a cured photosensitive liquid), electron beam melting (using a powder as feedstock and selectively melting the powder using an electron beam), laser additive manufacturing (using a powder as a feedstock and selectively melting the powder using a laser), and laser object manufacturing (applying thin solid sheets of material over a workstage and using a laser to cut away unwanted portions).

Many additive manufacturing processes utilize a scanning energy beam to fuse a fusible material. Scanning is commonly implemented in a raster scanning mode where a plurality of substantially parallel scan lines are used to form the article. In order to reduce deformation of the layers from thermal or chemical reaction kinetics effects, each layer is often scanned in discrete sections at separate locations along the layer. Seams are thus formed at boundaries between adjacent sections. It is known to avoid direct stacking of seams between adjacent layers by providing some variation in section patterning between adjacent layers. However, such variation in section patterning has been practiced utilizing pre-set repeating variation patterns without regard to the specifics of the article being manufactured. Although such pre-set repeating patterns can reduce direct vertical seam stacking can still occurs through repetition of section patterning throughout the various layers of the manufactured article.

### BRIEF DESCRIPTION

According to some embodiments of this disclosure, a method for making an article comprises generating a digital model of the article that comprises an internal cavity. The digital model is inputted into an additive manufacturing apparatus or system comprising an energy source. The additive manufacturing apparatus applies energy from the energy source to successively applied incremental quantities of a metal powder, which fuses the powder to form incremental portions of the metal powder according to the digital model to form the article comprising the internal cavity. Abrasive magnetic particles are disposed in the internal cavity, and a magnetic field is applied to the magnetic particles in the internal cavity. Repeated relative movement is imparted between the magnetic field and the article to hone a fused metal powder surface of the internal cavity.

According to some aspects of the disclosure, the above-described method further includes selective exposure of incremental quantities of metal powder in a layer of a powder bed over a support with a laser or electron beam to fuse the selectively exposed metal powder in a pattern over the support corresponding to a layer of the digital model of the heat exchanger assembly. This process is repeated by providing a layer of the powder over the selectively exposed layer and selectively exposing incremental quantities of metal powder in the layer to fuse the selectively exposed powder in a pattern corresponding to each successive layer of the digital model of the article. Metal powder is removed from a region corresponding to the cavity according to the digital model.

### BRIEF DESCRIPTION OF THE DRAWINGS

Subject matter of this disclosure is particularly pointed out and distinctly claimed in the claims at the conclusion of the specification. The foregoing and other features, and advantages of the present disclosure are apparent from the following detailed description taken in conjunction with the accompanying drawings in which:
FIG. 1 is a schematic depiction of an apparatus for making articles using metal powder fusion additive manufacturing;
FIG. 2 is a schematic depiction of a heat exchanger that can be manufactured as described herein;
FIG. 3 is a schematic depiction of an apparatus for applying a magnetic field and relative motion to abrasive magnetic particles and an additive-manufactured article; and
FIG. 4 is another schematic depiction of an apparatus for applying a magnetic field and relative motion to abrasive magnetic particles and an additive-manufactured article.

### DETAILED DESCRIPTION

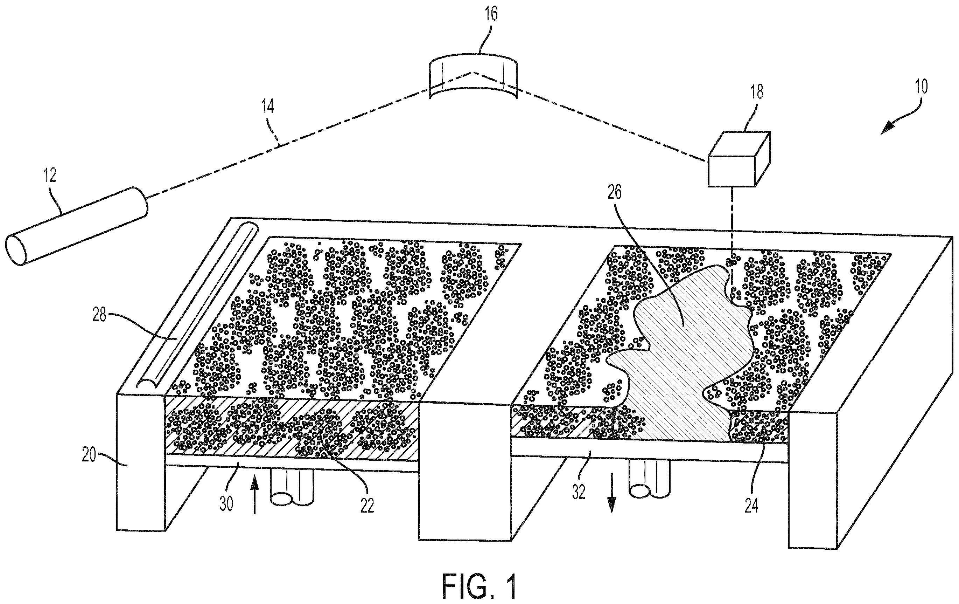

Referring now to the Figures, FIG. 1 depicts an example embodiment of an additive manufacturing apparatus and process. As shown in FIG. 1, an example of an additive manufacturing system or apparatus 10 includes energy source 12 that generates an energy beam 14, a first wave guide or other optical guide 16 that is used to guide the energy beam, a second wave guide or optical guide 18, a frame 20, a powder supply 22, a powder processing bed 24, sintered powder material 26, a spreader 28, a powder supply support 30, and a stack support 32. Of course, the illustration in FIG. 1 is schematic in nature, and many alternative designs of additive manufacturing devices are possible. Various types of additive manufacturing materials, energy sources, powder feed and storage, atmosphere control, and processes can be used to fabricate the heat exchanger and the individual features thereof that are described herein. The type of additive manufacturing process used depends in part on the type of material out of which it is desired to manufacture the component. In some embodiments, the heat exchanger is made of metal, and a metal-forming additive manufacturing process can be used. Such processes can include selective laser sintering (SLS), powder bed laser fusion (PBLF), or direct metal laser sintering (DMLS), in which a layer of metal or metal alloy powder is applied to the workpiece being fabricated and selectively sintered according to the digital model with heat energy from a directed laser beam. Another type of metal-forming process includes selective laser melting (SLM) or electron beam melting (EBM), in which heat energy provided by a directed laser or electron beam is used to selectively melt (instead of sinter) the metal powder so that it fuses as it cools and solidifies. FIG. 1 merely illustrates one potential additive manufacturing system for creating an additively manufactured article.

Energy source 12 can be any source capable of creating focused energy. For example, energy source 12 can be a laser or an electron beam generator. Energy source 12 generates an energy beam 14, which is a beam of focused or focusable energy, such as a laser beam or an electron beam. Optical guide 16 such as a mirror is present in some embodiments to deflect radiation in a desired direction. A second optical guide 18, such as an optical head is present in some embodiments, and also directs energy in a desired direction. For example, optical guide 18 can include a mirror and be attached to an x-y positioning device. Frame 20 is used to contain powder material in powder supply 22 and in powder processing bed 24. Powder supply 22 and powder processing bed 24 include powder material, such as or powdered metals. Powder processing bed 24 further includes fused powder 26. Fused powder 26 is powder contained within powder processing bed 24 that has been at least partially sintered or melted. Spreader 28 is a spreading device such as an air knife using an inert gas instead of air, which can transfer powder material from powder supply 22 to powder processing bed 24. The depiction of spreader 28 in FIG. 1 is of course only schematic in nature, and does not depict specific features such as controllably directed air jet nozzles that could be used to remove metal powder from targeted portions of the assembly including internal cavities such as fluid flow passages in a heat exchanger core. Powder supply support 30 and stack support 32 are used to raise and/or lower material thereon during additive manufacturing.

During operation, energy source 12 generates energy beam 14, which is directed by the optical guides 16 and 18 to the powder processing bed 24. The energy intensity and scanning rate and pattern of the energy beam 14 can be controlled to produce a desired result in the powder processing bed. In some aspects, the result can be partial melting of powder particles resulting in a fused structure after solidification such as a sintered powder metal structure having some degree of porosity derived from the gap spaces between fused powder particles. In some aspects, the result from exposure to the energy beam 14 can be complete localized melting and fluidization of the powder particles producing a metal article having a density approaching or equal to that of a cast metal article. In some aspects, the energy beam provides homogeneous melting such that an examination of the manufactured articles can detect no particle pattern from the original particles. After each layer of the additively manufactured article is completed, powder supply support 30 is moved to raise the height of powder material supply 22 with respect to frame. Similarly, stack support 32 is moved to lower the height of article with respect to frame 20. Spreader 28 transfers a layer of powder from powder supply 22 to powder processing bed 24. By repeating the process several times, an object may be constructed layer by layer. Components manufactured in this manner may be made as a single, solid component, and are generally stronger if they contain a smaller percentage of oxygen, hydrogen, or carbonaceous gases. In some embodiments, the quantity of impurities of, for example, oxygen, is reduced to less than 50 ppm, or even less than 20 ppm.

The digital models used in the practice of the disclosure are well-known in the art, and do not require further detailed description here. The digital model can be generated from various types of computer aided design (CAD) software, and various formats are known, including but not limited to STL (standard tessellation language) files, AMF (additive manufacturing format) files, PLY files, wavefront (.obj) files, and others that can be open source or proprietary file formats.

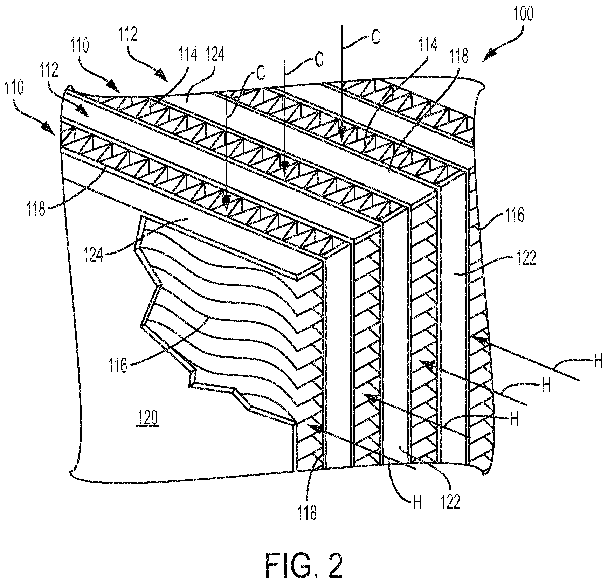

Manufacture of articles through powder fusion additive manufacturing can result in surfaces that are relatively rough compared to some other more conventional manufacturing techniques. Additionally, one of the beneficial features of additive manufacturing is the capability to fabricate articles with internal features such as internal cavities that are not readily manufacturable by conventional fabricating techniques and that are not readily accessed to smooth, hone, or otherwise finish internal surfaces. One non-limiting example embodiment of an application where smooth internal surfaces can be beneficial is for heat exchangers where smooth internal surfaces can promote efficient fluid flow and heat transfer. An example embodiment of a heat exchanger is depicted in FIG. 2. As shown in FIG. 2, a heat exchanger assembly 100 is shown in an isometric view with a cut-away along the front face to illustrate the inside of the assembly. As shown in FIG. 2, the heat exchanger 100 includes a heat absorption side (cold side) fluid flow path 110 through the fin structures 114 and a heat rejection side (hot side) fluid flow path 112 through the fin structures 112. Fin thickness can range from about 0.01 inches down to about 0.003 inches, with thicknesses of about 0.004 inches to about 0.006 inches being common for aircraft ECS (environmental control system) heat exchangers. Typical fin spacing can range from about 0.040 inches down to about 0.010 inches. The cold and hot side fluid flow paths 110 and 112 are separated by parting sheets 118. Parting sheets 118 are also formed from metal alloys and act to support the fin structures 114 and 116. End sheets 120 form the outside barriers of primary hot heat exchanger 100. Closure bars 122 and 124 form the outside barriers of cold and hot fluid flow paths 110 and 112, respectively. Additional structural elements (not shown) include, but are not limited to core bands that act to support the overall stack of hot and cold fin structures of heat exchanger 100, mounting structures, or fluid flow guide elements. During operation, cold air from a cold air source (not shown, e.g., ram air or fan-assisted ram or other intake air on an aircraft) enters the cold side fluid flow path 110 in the direction indicated by the arrows C. Hot air from a hot air source (not shown, e.g., bleed air from a compressor section of a turbocompressor engine or ECS process air on an aircraft) enters the hot side fluid flow path 112 in the direction of arrows H and rejects heat through the fin structures 114, 116 and across the parting sheets 118 to the cold side fluid flow path 110. The metal components of heat exchanger 100 may be any metal known in the art of heat exchanger design. In an embodiment, the metal components of an aircraft heat exchanger may be aluminum

As mentioned above, the powder used in the methods described herein comprises a metal powder. Various metals can be used, depending on the material and properties requirements for the application of the finished product. Various ferrous steel alloys can be used, including stainless and non-stainless steels, with optional inclusion of various alloying elements such as chromium or nickel for properties such as high-temperature performance. Other alloys such as aluminum alloys and titanium can be used as well. Metal powders can be formed using a gas atomized process. Examples of particle sizes for the metal powders can range from 5 µm to 150 µm. In some aspects, the alloy elements can be combined together before forming a powder having a homogeneous composition. In some aspects, one or more of the individual alloy elements can have its own powder particles that are mixed with particles of other elements in the alloy mixture, with formation of the actual alloy to occur during the fusion step of the additive manufacturing process. In some aspects, the powder is "neat", i.e., it includes only particles of the alloy or alloy elements. In other aspects, the powder can include other components such as polymer powder particles. In selective sintering, polymer particles can help to temporarily bind metal powder particles together during processing, to be later removed by pyrolysis caused by the energy source or post-fabrication thermal processing.

As mentioned above, abrasive magnetic particles are disposed in an internal cavity of an article fabricated by metal powder fusion additive manufacturing. As used herein, an "abrasive" particle means a particle having a surface hardness greater than that of a metal surface forming the boundary of the cavity. As used herein, a "magnetic" particle means a particle that is motion responsive to a magnetic field. In some embodiments, the particles can comprise a ferromagnetic material, including but not limited to iron, nickel, cobalt, or their alloys or solid solutions with other elements (e.g., iron-silicon). In some embodiments, the particles can comprise a magnetic core such as a ferromagnetic core and a shell that may or may not be magnetic. In some embodiments, the shell material can selected to provide desired surface hardness or other surface properties. For example, in some embodiments, the particles can have intersecting angular surfaces to provide the particle with a cutting edge. Examples of shell materials include but are not limited to hard ceramics such as cubic boron nitride, silicon carbide, silicon nitride, aluminum oxide, or materials of similar hardness to these materials. Shell materials can be applied to the core by techniques including but not limited to physical vapor deposition or chemical vapor deposition. Abrasive particles can have sizes in a range with a low end of 5 µm, more specifically 10 µm, more specifically 15 µm, more specifically 20 µm, and even more specifically 30, and an upper end of 250 µm, more specifically 150 µm, more specifically 100 µm, more specifically 75 µm, and even more specifically 50 µm. The above upper and lower range endpoints can be independently combined to disclose a number of different ranges. In some embodiments, different sizes of particles can be combined or can be utilized in separate process steps. For example, a larger particle size (e.g., 100 µm) can be utilized to provide relatively rapid smoothing of treated surfaces, followed by a smaller particle size (e.g., 20 µm) for final treatment to a desired smoothness level. The abrasive magnetic particles can be introduced through an internal cavity of the article during the additive manufacturing process (e.g., by adding a layer of the particles in the cavity location according to the digital model and neither fusing nor removing the particles), or they can be introduced after the layer building process is complete (e.g., by introducing them entrained in a fluid through a flow path inlet or outlet). After completion of the surface honing/smoothing, the abrasive magnetic particles can be removed with a fluid flow through the cavity that entrains and carries away the particles. In some embodiments, the magnetic field can be used to direct the particles to a region of the cavity or cavities where they are entrained and carried away, or even to completely remove the particles through magnetically-caused movement of the particles. In some embodiments, the abrasive magnetic particles can be left in the article, either in the cavity, or they can be directed by application of the magnetic field into an internal receptacle chamber.

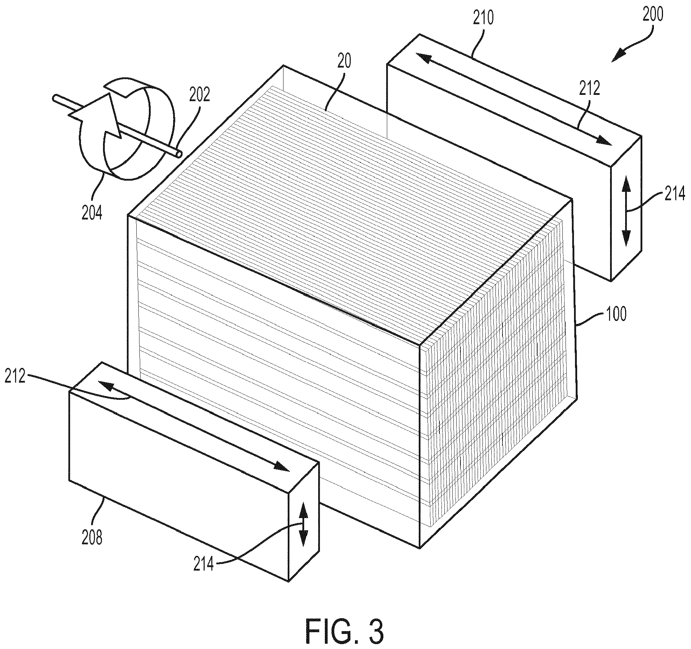

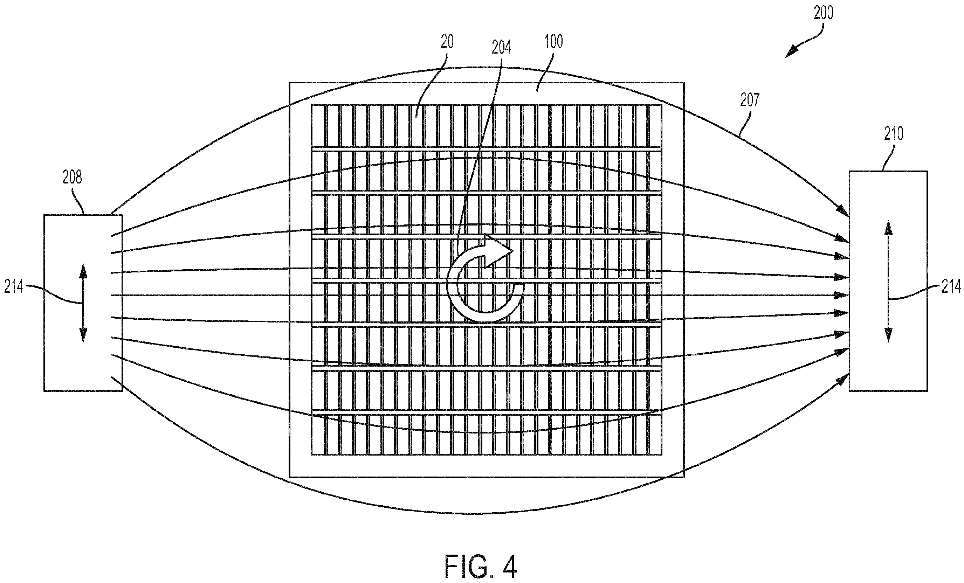

Example apparatus and process embodiments for applying a magnetic field and relative motion are schematically depicted in FIGS. 3 and 4 in isometric and side views, respectively. As shown in FIGS. 3 and 4, an apparatus 200 includes an article such as a heat exchanger core 100 secured to an apparatus component (not shown) capable of rotating the article about an axis 202 in the direction of arrow 204. Magnetic particles 206 are disposed in the hot or cold (or both) side fluid flow paths (or any other internal cavity for articles other than heat exchangers). In some embodiments, the magnetic particles 206 can be retained in the internal cavity or cavities during processing by temporarily sealing inlets and outlets to the cavity or cavities. In some embodiments, the magnetic particles can be retained in the internal cavity or cavities during processing by action of an applied magnetic field.

During operation, a magnetic field with oscillating flux lines 207 is applied between magnets 208 and 210 of opposite polarity, through the body of the article. Any direction of oscillation can be used, depending on the orientation of the internal cavity surfaces with respect to the magnets, including but not limited to oscillation in the direction of arrows 212 or 214. The direction or pattern of oscillation can also be changed during processing to achieve targeted surface honing effects. The frequency of oscillation can be varied widely, from 3 to 100 kHz. The oscillation can be achieved in various techniques, including the utilization of programmable ultrasonic transducers integrated with electromagnets to achieve field oscillation, or physical oscillating movement of the magnets 208, 210. The article is rotated in the direction of arrow 204 while the oscillating magnetic field is applied, and relative movement of the particles with respect to the internal cavity surfaces hones those surfaces to a targeted smoothness. In some embodiments, the relative movement provides relative movement of the particles that is normal relative to the surface being honed. In some embodiments, abrasive magnetic particles can be used to hone surfaces that cannot readily be honed by conventional surface smoothing techniques, such as between tightly-packed fin structures in heat exchangers as described above.

While the present disclosure has been described in detail in connection with only a limited number of embodiments, it should be readily understood that the present disclosure is not limited to such disclosed embodiments. Rather, the present disclosure can be modified to incorporate any number of variations, alterations, substitutions or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A method for making an article (100), comprising
generating a digital model of the article (100) that comprises an internal cavity (110,112);
inputting the digital model into an additive manufacturing apparatus or system (10) comprising an energy source (12);
forming the article (100) comprising an internal cavity (110,112) by repeatedly applying energy from the energy source (12) to fuse successively applied incremental quantities of a metal powder (22) corresponding to the digital model of the article (100);
disposing abrasive magnetic particles (206) in the internal cavity (110,112);
applying a magnetic field (207) to the magnetic particles (206) in the internal cavity (110,112), and imparting repeated relative movement between the magnetic field (207) and the article (100) to hone a fused metal powder surface of the internal cavity (110,112).

2. The method of claim 1, wherein imparting repeated relative movement comprises repeatedly moving the article (100) while the magnetic field (207) is stationary.

3. The method of claim 1, wherein imparting repeated relative movement comprises repeatedly moving the magnetic field (207) while the article (100) is stationary.

4. The method of claim 1, wherein imparting repeated relative movement comprises repeatedly moving both the article (100) and the magnetic field (207).

5. The method of any preceding claim, wherein imparting repeated relative movement provides relative movement of the particles (206) that is normal relative to the honed surface.

6. The method of any preceding claim, wherein imparting repeated relative movement comprises rotating the article (100) while oscillating the magnetic field (207) to provide movement of the particles (206) that is normal relative to the honed surface.

7. The method of any preceding claim, wherein the abrasive magnetic particles (206) are disposed in the internal cavity (110,112) after the article (100) has been formed.

8. The method of any preceding claim, wherein the article (100) is a heat exchanger and the internal cavity (110,112) is a fluid flow passage in the heat exchanger.

9. The method of any preceding claim, further comprising:
selectively exposing incremental quantities of metal powder (22) in a layer of a powder bed (24) over a support (30) with a laser or electron beam (14) to fuse the selectively exposed metal powder (22) in a pattern over the support (30) corresponding to a layer of the digital model of the article (100);
repeatedly providing a layer of the powder (22) over the selectively exposed layer and selectively exposing incremental quantities of metal powder (22) in the layer to fuse the selectively exposed metal powder (22) in a pattern corresponding to a successive layer of the digital model of the article (100);
removing unfused metal powder (22) in a region corresponding to the cavity (110,112) according to the digital model.

10. The method of claim 9, further comprising re-positioning the support (30) between repeated selective exposures of the metal powder (22) to maintain each layer being fused at a fixed position with respect to the laser or electron beam (14).

11. The method of any preceding claim, wherein the particles (206) comprise a relatively soft magnetic core and a relative hard non-magnetic abrasive shell.

12. The method of claim 11, wherein the core comprises iron or iron-silicon alloy.

13. The method of claim 11 or 12, wherein the shell comprises cubic boron nitride, silicon carbide, silicon nitride, or aluminum oxide.

14. The method of any preceding claim, further comprising removing the abrasive magnetic particles (206) from the cavity (110,112).
